# EUROPEAN PATENT SPECIFICATION

(11) **EP 3 503 598 B1**
(45) Date of publication and mention of the grant of the patent: **20.11.2019**
(21) Application number: 17210250.1
(22) Date of filing: 22.12.2017
(51) Int. Cl.: H04W 4/12

(54) **DEVICES AND METHODS FOR DISTRIBUTING MESSAGES IN A MOBILE COMMUNICATION NETWORK**
GERÄT UND VERFAHREN ZUR VERTEILUNG VON NACHRICHTEN IN EINEM MOBILEN KOMMUNIKATIONSNETZWERK
APPAREILS ET MÉTHODE DE DISTRIBUTION DE MESSAGES DANS UN RÉSEAU DE COMMUNICATION MOBILE

(43) Date of publication of application: 26.06.2019
(73) Proprietor: Deutsche Telekom AG, 53113 Bonn (DE)
(72) Inventor: Klotz, Michael, 01109 Dresden (DE)
(74) Representative: Vossius & Partner Patentanwälte Rechtsanwälte mbB

(56) References cited:
- WO-A1-2016/192639
- US-A1- 2016 353 422
- US-A1- 2017 164 349

## Description

### TECHNICAL FIELD

In general, the present invention relates to mobile communication networks. More specifically, the present invention relates to devices and methods for distributing messages, in particular alert messages to user equipments in a mobile communication network.

### BACKGROUND

In current mobile communication networks, i.e. 4G LTE systems, the core network generally has a static architecture. Control plane network functions and data plane (also referred to as user plane) network functions are provided by the fixed network elements of the core network, such as a Mobility Management Entity (MME), a Serving Gateway (SGW), a PDN Gateway (PGW) and the like. These network elements handle all the network traffic that passes through the Evolved Packet Core (EPC) regardless of the type of services associated with the network traffic.

In comparison to 4G mobile communication systems, the future 5th Generation mobile technology (5G) will support use cases with an enormous variety of performance attributes, for instance, ultra-reliable and/or ultra-low latency communication for mission critical services, eHealth, public safety, real-time vehicle control, tactile Internet, connectivity for drones, and the like. To support services with such a diverse range of requirements, network slices and logical network functions are expected to be among the key building blocks of 5G networks.

Generally, a network slice is implemented on the physical network resources, i.e. the physical infrastructure of a mobile communication network, such as servers, routers, base stations and the like and often comprises a collection of logical network functions that support the communication services for particular use cases. These logical network functions are often implemented in a control plane of a network slice and can be considered to run on one or more virtual machines being part the network slice. The virtual machines, in turn, are implemented on the physical network resources of the mobile communication network.

In contrast to traditional core networks, which have been designed as a single network architecture supporting a maximum level of connectivity and providing multiple services, network slicing allows networks to be logically separated with each network slice providing customized connectivity as well as other network functions and/or services, and all network slices can share the same or similar functional components. Network slicing thus significantly increases flexibility and dynamicity of the core network and allows, for instance, implementing an access-agnostic core. Thus, network slicing will be one of the main features for 5G developments and enable provision of service- and customer-tailored network functions, aiming especially at vertical integration of industries.

Because of the various different use cases for network slices it is foreseeable that different user equipments, although being located within the same spatial area, often will be associated with, i.e. served by different network slices of a mobile communication network. In such a scenario the problem can arise how to distribute an area-specific message, such as a traffic alert message, to the user equipments, which are located in the same spatial area, but associated with different network slices. Such an area-specific message, for instance, could inform vehicles about a road blocking caused by an accident. This could arise, for instance, in the case of a traffic accident and a blocking of a road caused thereby.

US 2017/0164349 A1 discloses an approach for providing network slices in a radio access network of a mobile communication network.

US 2016/0353422 A1 discloses a system and method for operating a global control plane in a mobile communication network and managing a plurality of network slices using the global control plane.

WO 2016/192639 A1 discloses systems and methods for operating network slices in a communication network. Mobile device attach requests can be handled by selecting an appropriate network slice for attaching the mobile device thereto. An attach request can include a mobile device identifier.

In light of the above, there is a need for improved devices and methods for distributing a message, in particular an alert message to user equipments in a mobile communication network.

### SUMMARY

It is an object of the invention to provide improved devices and methods for distributing a message, in particular an alert message to user equipments in a mobile communication network.

The foregoing and other objects are achieved by the subject matter of the independent claims. Further implementation forms are apparent from the dependent claims, the description and the figures.

According to a first aspect the invention relates to a mobile communication network comprising a network entity for providing area-specific messages to a plurality of user equipments of the mobile communication network, wherein each of the plurality of user equipments is associated with a respective network slice of a plurality of network slices of the mobile communication network. Each of the plurality of network slices is configured to provide information about the current spatial position and about the current network slice association of each of the plurality of user equipments associated with the respective network slice to the network entity, wherein the information about the current spatial position and about the current network slice association of each of the plurality of user equipments comprises an identifier, in particular an International Mobile Subscriber Identity, IMSI, for each of the plurality of user equipments. The network entity is configured to: receive the information about the current spatial position and about the current network slice association of each of the plurality of user equipments; and forward on the basis of the information about the current spatial position and about the current network slice association of each of the plurality of user equipments an area-specific message to those network slices of the plurality of network slices, which are associated with at least one of the plurality of user equipments located in a defined spatial area of the mobile communication network for distributing the area-specific message to the plurality of user equipments located in the defined spatial area of the mobile communication network. In an embodiment, the area-specific message can be an area-specific alert message. In an embodiment, the network entity can be triggered to forward the area-specific message by a traffic monitoring system. In an embodiment, the area-specific message to be forwarded by the network entity can be provided by the traffic monitoring system. In an embodiment, the network entity can define the defined spatial area of the mobile communication network. In another embodiment, the traffic monitoring system can define the defined spatial area of the mobile communication network.

Thus, the present invention allows for an improved distribution of messages, in particular area-specific alert messages, such as traffic alert messages, to user equipments in a mobile communication network. As used herein, "area-specific message" means a message, which is intended for user equipments in the defined spatial area of the mobile communication network. This message can contain area-specific information, such as that a road has been blocked in the defined spatial area of the mobile communication network due to a traffic accident.

In a further embodiment of the first aspect, the network entity comprises: a communication interface configured to receive the information about the current spatial position and about the current network slice association of each of the plurality of user equipments; and a processing unit configured to forward on the basis of the information about the current spatial position and about the current network slice association of each of the plurality of user equipments the area-specific message to those network slices of the plurality of network slices, which are associated with at least one of the plurality of user equipments located in the defined spatial area of the mobile communication network for distributing the area-specific message to the plurality of user equipments located in the defined spatial area of the mobile communication network.

In a further embodiment of the first aspect, the network entity further comprises a memory configured to store the information about the current spatial position and about the current network slice association of each of the plurality of user equipments. In an embodiment, the network entity is configured to receive the information about the current spatial position and about the current network slice association of each of the plurality of user equipments from one or more other network entities, such as the respective access and mobility functions, AMFs, of the respective network slices.

In a further embodiment of the first aspect, the network entity is implemented as one or more virtual network functions or one or more network slices of the mobile communication network.

In a further embodiment of the first aspect, the information about the current spatial position and about the current network slice association of each of the plurality of user equipments comprises spatial coordinates, e.g. GPS coordinates of the current spatial position of each of the plurality of user equipments.

In a further embodiment of the first aspect, the information about the current spatial position and about the current network slice association of each of the plurality of user equipments comprises for each of the plurality of user equipments information about whether the current spatial position of each of the plurality of user equipments is within the defined spatial area or not.

In a further embodiment of the first aspect, the information about the current spatial position and about the current network slice association of each of the plurality of user equipments comprises a network slice identifier of the respective network slice each of the plurality of user equipments is associated with.

In a further embodiment of the first aspect, the information about the current spatial position and about the current network slice association of each of the plurality of user equipments comprises an identifier, in particular an IMSI for each of the plurality of user equipments.

According to a second aspect the invention relates to a mobile communication network comprising a network entity according to the first aspect and one or more network slices, wherein each network slice comprises one or more user equipments.

In a further embodiment of the second aspect, the one or more user equipments comprise one or more vehicular user equipments, e.g. one or more vehicles with an user equipment in the form of an on-board unit.

In a further embodiment of the second aspect, each of the one or more network slices is configured to distribute the area-specific message to the plurality of user equipments located in the defined spatial area of the mobile communication network.

In a further embodiment of the second aspect, the mobile communication network is a mobile communication network according to the 5G standard or a standard based thereon, wherein each of the one or more network slices comprises an access and mobility function, AMF, configured to distribute the area-specific message to the plurality of user equipments located in the defined spatial area of the mobile communication network.

In a further embodiment of the second aspect, the mobile communication network comprises a plurality of base stations, wherein the defined spatial area of the mobile communication network is defined by or comprises the coverage area of one or more of the plurality of base stations of the mobile communication network.

In a further embodiment of the second aspect, each of the plurality of network slices is configured to provide the information about the current spatial position and about the current network slice association of each of the plurality of user equipments associated with the respective network slice to the network entity.

In a further embodiment of the second aspect, the network entity is implemented as one or more virtual network functions or one or more network slices of the mobile communication network.

According to a third aspect the invention relates to a corresponding method for providing area-specific messages to a plurality of user equipments of a mobile communication network, wherein each of the plurality of user equipments is associated with a respective network slice of a plurality of network slices of the mobile communication network. The method comprises the steps of: receiving information about the current spatial position and about the current network slice association of each of the plurality of user equipments; and forwarding on the basis of the information about the current spatial position and about the current network slice association of each of the plurality of user equipments an area-specific message to those network slices of the plurality of network slices, which are associated with at least one of the plurality of user equipments located in a defined spatial area of the mobile communication network for distributing the area-specific message to the plurality of user equipments located in the defined spatial area of the mobile communication network.

According to a fourth aspect the invention relates to a computer program product comprising program code for performing the method of the third aspect when executed on a computer.

Embodiments of the invention can be implemented in hardware and/or software.

### BRIEF DESCRIPTION OF THE DRAWINGS

Further embodiments of the invention will be described with respect to the following figures, wherein:
Fig. 1 shows a schematic diagram illustrating a mobile communication network comprising a network entity according to an embodiment for distributing a message to a plurality of user equipments;
Fig. 2 shows a schematic diagram illustrating a mobile communication network comprising a network entity according to a further embodiment for distributing a message to a plurality of user equipments; and
Fig. 3 shows a flow diagram illustrating a method of distributing a message to a plurality of user equipments according to an embodiment.

In the various figures, identical reference signs will be used for identical or at least functionally equivalent features.

### DETAILED DESCRIPTION OF EMBODIMENTS

In the following description, reference is made to the accompanying drawings, which form part of the disclosure, and in which are shown, by way of illustration, specific aspects in which the present invention may be placed. It will be appreciated that other aspects may be utilized and structural or logical changes may be made without departing from the scope of the present invention. The following detailed description, therefore, is not to be taken in a limiting sense, as the scope of the present invention is defined by the appended claims.

For instance, it will be appreciated that a disclosure in connection with a described method may also hold true for a corresponding device or system configured to perform the method and vice versa. For example, if a specific method step is described, a corresponding device may include a unit to perform the described method step, even if such a unit is not explicitly described or illustrated in the figures.

Moreover, in the following detailed description as well as in the claims, embodiments with different functional blocks or processing units are described, which are connected with each other or exchange signals. It will be appreciated that the present invention covers embodiments as well, which include additional functional blocks or processing units that are arranged between the functional blocks or processing units of the embodiments described below.

Finally, it is understood that the features of the various exemplary aspects described herein may be combined with each other, unless specifically noted otherwise.

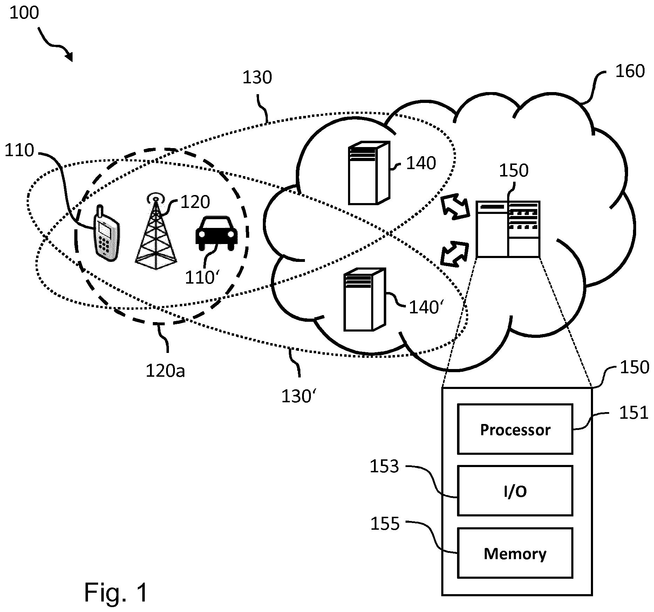

Figure 1 shows a schematic diagram illustrating a mobile communication network 100 according to an embodiment. In an embodiment, the mobile communication network 100 is a mobile communication network 100 according to the 5G standard or a standard based thereon. The mobile communication network 100 comprises a plurality of base stations 120 being part of a radio access network (RAN) of the mobile communication network 100 and a core network 160.

The mobile communication network 100 comprises a plurality of network slices 130, 130', i.e. logical subnetworks 130, 130'. The network architecture for supporting embodiments of the invention, such as the architecture of the mobile communication network 100 shown in figure 1, may be either realized according to Network Function Virtualization (NFV) and Software Defined Networks (SDN) paradigms or may rely on dedicated hardware appliances or entities. The network slices 130, 130' may be built upon virtual and/or physical infrastructures, including wireless Access Points (APs), Data Centers, Edge Cloud, Edge Data Centers and/or Points of Presence, interconnected by a transport network realized either by legacy connectivity methods or by, for instance, virtual links, virtual switches and virtual routers controlled by SDN controllers.

By way of example, the mobile communication network 100 shown in figure 1 comprises a first network slice 130 and a second network slice 130'. The first network slice 130 can be implemented on physical infrastructure 140, such as one or more servers, of the mobile communication network 100. Likewise, the second network slice 130' can be implemented on different or partly the same physical infrastructure 140', such as one or more servers, of the mobile communication network 100. To this end, the core network 160 of the mobile communication network 100 can comprise one or more network orchestrators (not shown in figure 1) configured to implement and operate the network slices 130, 130' in the mobile communication network 100.

As illustrated in figure 1, the exemplary base station 120 is part of both the first network slice 130 and the second network slice 130'. A user equipment 110 in the form of a mobile phone 110 is associated with the first network slice 130, i.e. the user equipment 110 is part of the first network slice 130. A further user equipment 110' in the form of a vehicular user equipment 110, for instance, an on board unit of a vehicle, is associated with the second network slice 130', i.e. the user equipment 110' is part of the second network slice 130'.

As illustrated in figure 1, the mobile communication network 100 further comprises a network entity 150 configured to provide area-specific messages to the plurality of user equipments 110, 110'. The network entity 150 is configured to receive information about the current spatial position and about the current network slice association of each of the plurality of user equipments 110, 110'. In an embodiment, the network entity 150 is configured to receive the information about the current spatial position and about the current network slice association of each of the plurality of user equipments 110, 110' from one or more other network entities, such as the respective access and mobility functions, AMFs, of the respective network slices 130, 130'.

Moreover, the network entity 150 is configured to forward on the basis of the information about the current spatial position and about the current network slice association of each of the plurality of user equipments 110, 110' an area-specific message to those network slices of the plurality of network slices 130, 130', which are associated with at least one of the plurality of user equipments 110, 110' located in a defined spatial area 120a of the mobile communication network 100 for distributing the area-specific message to the plurality of user equipments 110, 110' located in the defined spatial area 120a of the mobile communication network 100.

In an embodiment, the network entity 150 can be triggered to forward the area-specific message by a traffic monitoring system implemented in or cooperating with the mobile communication network 100. In an embodiment, the area-specific message to be forwarded by the network entity 150 can be provided by such a traffic monitoring system. In an embodiment, the network entity 150 itself can define the defined spatial area 120a of the mobile communication network 100. In another embodiment, the traffic monitoring system can define the defined spatial area 120a of the mobile communication network 100. As used herein, "area-specific message" means a message, which is intended for the user equipments 110, 110' in the defined spatial area 120a of the mobile communication network 100. This message can contain area-specific information, such as that a road has been blocked in the defined spatial area 120a of the mobile communication network 100 due to a traffic accident.

In the embodiment shown in figure 1, the network entity 150 comprises a communication interface 153 configured to receive information about the current spatial position and about the current network slice association of each of the plurality of user equipments 110, 110' and a processing unit 151 configured to forward on the basis of the information about the current spatial position and about the current network slice association of each of the plurality of user equipments 110, 1 10' the area-specific message to those network slices of the plurality of network slices 130, 130', which are associated with at least one of the plurality of user equipments 110, 110' located in the defined spatial area 120a of the mobile communication network 100 for distributing the area-specific message to the plurality of user equipments 110, 110' located in the defined spatial area 120a of the mobile communication network 100.

In an embodiment, the network entity 150 further comprises a memory 155 configured to store the information about the current spatial position and about the current network slice association of each of the plurality of user equipments 110, 110'.

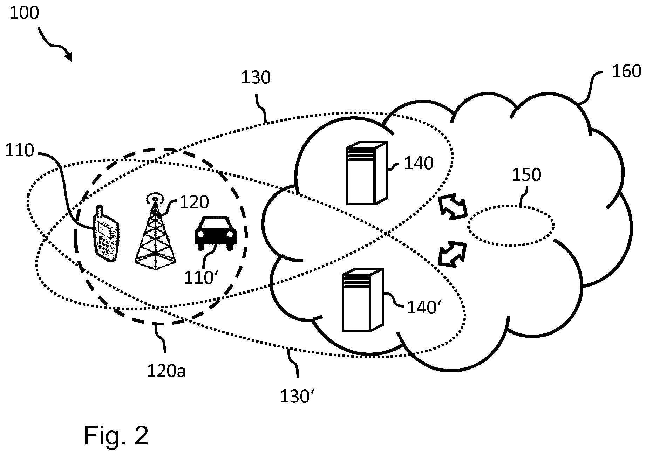

In the embodiment shown in figure 1, the network entity 150 is a physical network entity 150, for instance, one or more servers located in the core network 160 of the mobile communication 100. Figure 2 shows a further embodiment of the mobile communication network 100, where the network entity 150 is a virtual network function or a further network slice of the mobile communication network 100.

In an embodiment, the information about the current spatial position and about the current network slice association of each of the plurality of user equipments 110, 110' comprises spatial coordinates, for instance, GPS coordinates or other GNSS coordinates of the current spatial position of each of the plurality of user equipments 110, 110'.

In an embodiment, the information about the current spatial position and about the current network slice association of each of the plurality of user equipments 110, 110' comprises for each of the plurality of user equipments 110, 110' information about whether the current spatial position of each of the plurality of user equipments 110, 110' is within the defined spatial area 120a.

In an embodiment, the information about the current spatial position and about the current network slice association of each of the plurality of user equipments 110, 110' comprises a network slice identifier of the respective network slice 130, 130' each of the plurality of user equipments 110, 110' is associated with.

In an embodiment, the information about the current spatial position and about the current network slice association of each of the plurality of user equipments 110, 110' comprises an identifier, in particular an IMSI for each of the plurality of user equipments 110, 110'.

In an embodiment, the area-specific message is an area-specific alert message, for instance, an area-specific alert message about a road blocking within the defined spatial area 120a.

In an embodiment, each of the one or more network slices 130, 130' is configured to distribute the area-specific message to the plurality of user equipments 110, 110' located in the defined spatial area 120a of the mobile communication network 100. In an embodiment, one or more of the plurality of network slices 130, 130' comprises an access and mobility function, AMF, configured to distribute the area-specific message to the plurality of user equipments 110, 110', which are located in the defined spatial area 120a of the mobile communication network 100 and associated with the respective network slice 130, 130'.

In an embodiment, the defined spatial area 120a is comprises the coverage area of one or more of the plurality of base stations 120 of the mobile communication network 100.

In an embodiment, each of the plurality of network slices 130, 130' is configured to provide the information about the current spatial position and about the current network slice association of each of the plurality of user equipments 110, 110' associated with the respective network slice 130, 130' to the network entity 150.

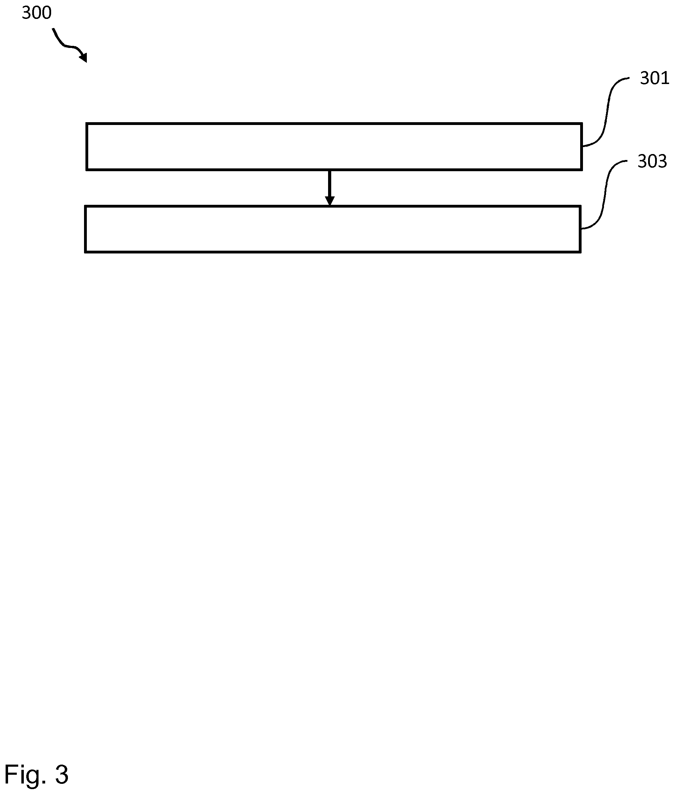

Figure 3 schematically illustrates a flow diagram of a corresponding method 300 for providing area-specific messages to the plurality of user equipments 130, 130'. The method 300 comprises the steps of: receiving 301 information about the current spatial position and about the current network slice association of each of the plurality of user equipments 110, 110'; and forwarding 303 on the basis of the information about the current spatial position and about the current network slice association of each of the plurality of user equipments 110, 110' an area-specific message to those network slices of the plurality of network slices 130, 130', which are associated with at least one of the plurality of user equipments 110, 110' located in a defined spatial area 120a of the mobile communication network 100 for distributing the area-specific message to the plurality of user equipments 110, 110' located in the defined spatial area 120a of the mobile communication network 100.

While a particular feature or aspect of the disclosure may have been disclosed with respect to only one of several implementations or embodiments, such feature or aspect may be combined with one or more other features or aspects of the other implementations or embodiments as may be desired and advantageous for any given or particular application. Furthermore, to the extent that the terms "include", "have", "with", or other variants thereof are used in either the detailed description or the claims, such terms are intended to be inclusive in a manner similar to the term "comprise". Also, the terms "exemplary", "for example" and "e.g." are merely meant as an example, rather than the best or optimal. The terms "coupled" and "connected", along with derivatives may have been used. It should be understood that these terms may have been used to indicate that two elements cooperate or interact with each other regardless whether they are in direct physical or electrical contact, or they are not in direct contact with each other.

Although specific aspects have been illustrated and described herein, it will be appreciated by those of ordinary skill in the art that a variety of alternate and/or equivalent implementations may be substituted for the specific aspects shown and described without departing from the scope of the present disclosure. This application is intended to cover any adaptations or variations of the specific aspects discussed herein.

Although the elements in the following claims are recited in a particular sequence with corresponding labeling, unless the claim recitations otherwise imply a particular sequence for implementing some or all of those elements, those elements are not necessarily intended to be limited to being implemented in that particular sequence.

Many alternatives, modifications, and variations will be apparent to those skilled in the art in light of the above teachings. Of course, those skilled in the art readily recognize that there are numerous applications of the invention beyond those described herein. While the present invention has been described with reference to one or more particular embodiments, those skilled in the art recognize that many changes may be made thereto without departing from the scope of the present invention. It is therefore to be understood that within the scope of the appended claims and their equivalents, the invention may be practiced otherwise than as specifically described herein.

## Claims

1. A mobile communication network (100) comprising a network entity (150) for providing area-specific messages to a plurality of user equipments (110, 110') of the mobile communication network (100), each of the plurality of user equipments (110, 110') being associated with a respective network slice of a plurality of network slices (130, 130') of the mobile communication network (100),
wherein each of the plurality of network slices (130, 130') is configured to provide information about the current spatial position and about the current network slice association of each of the plurality of user equipments (110, 110') associated with the respective network slice (130, 130') to the network entity (150), wherein the information about the current spatial position and about the current network slice association of each of the plurality of user equipments (110, 110') comprises an identifier, in particular an International Mobile Subscriber Identity, IMSI, for each of the plurality of user equipments (110, 110'), and
wherein the network entity (150) is configured to:
receive the information about the current spatial position and about the current network slice association of each of the plurality of user equipments (110, 110'); and
forward on the basis of the information about the current spatial position and about the current network slice association of each of the plurality of user equipments (110, 110') an area-specific message to those network slices of the plurality of network slices (130, 130'), which are associated with at least one of the plurality of user equipments (110, 110') located in a defined spatial area (120a) of the mobile communication network (100) for distributing the area-specific message to the plurality of user equipments (110, 110') located in the defined spatial area (120a) of the mobile communication network (100).

2. The mobile communication network (100) of claim 1, wherein the network entity (150) comprises:
a communication interface (153) configured to receive information about the current spatial position and about the current network slice association of each of the plurality of user equipments (110, 110'); and
a processing unit (151) configured to forward on the basis of the information about the current spatial position and about the current network slice association of each of the plurality of user equipments (110, 110') the area-specific message to those network slices of the plurality of network slices (130, 130'), which are associated with at least one of the plurality of user equipments (110, 110') located in the defined spatial area (120a) of the mobile communication network (100) for distributing the area-specific message to the plurality of user equipments (110, 110') located in the defined spatial area (120a) of the mobile communication network (100).

3. The mobile communication network (100) of claim 2, wherein the network entity (150) further comprises a memory (155) configured to store the information about the current spatial position and about the current network slice association of each of the plurality of user equipments (110, 110').

4. The mobile communication network (100) of any one of the preceding claims, wherein the information about the current spatial position and about the current network slice association of each of the plurality of user equipments (110, 110') comprises spatial coordinates of the current spatial position of each of the plurality of user equipments (110, 110').

5. The mobile communication network (100) of any one of claims 1 to 3, wherein the information about the current spatial position and about the current network slice association of each of the plurality of user equipments (110, 110') comprises for each of the plurality of user equipments (110, 110') information about whether the current spatial position of each of the plurality of user equipments (110, 110') is within the defined spatial area (120a).

6. The mobile communication network (100) of any one of the preceding claims, wherein the information about the current spatial position and about the current network slice association of each of the plurality of user equipments (110, 110') comprises a network slice identifier of the respective network slice (130, 130') each of the plurality of user equipments (110, 110') is associated with.

7. The mobile communication network (100) of claim 1, wherein the network entity (150) is implemented as one or more virtual network functions or as one or more network slices of the mobile communication network (100).

8. The mobile communication network (100) of claim 1 or 7, wherein each of the one or more network slices (130, 130') is configured to distribute the area-specific message to the plurality of user equipments (110, 110') located in the defined spatial area (120a) of the mobile communication network (100).

9. The mobile communication network (100) of claim 8, wherein the mobile communication network (100) is a mobile communication network (100) according to the 5G standard or a standard based thereon and wherein one or more of the plurality of network slices (130, 130') comprises an access and mobility function, AMF, configured to distribute the area-specific message to the plurality of user equipments (110, 110'), which are located in the defined spatial area (120a) of the mobile communication network (100) and associated with the respective network slice (130, 130').

10. The mobile communication network (100) of any one of claims 1 or 7 to 9, wherein the mobile communication network (100) comprises a plurality of base stations (120) and wherein the defined spatial area (120a) comprises the coverage area of one or more of the plurality of base stations (120) of the mobile communication network (100).

11. A method (300) for providing area-specific messages to a plurality of user equipments (110, 110') of a mobile communication network (100), each of the plurality of user equipments (110, 110') being associated with a respective network slice of a plurality of network slices (130, 130') of the mobile communication network (100), wherein the method (300) comprises:
providing, by each of a the plurality of network slices (130, 130'), information about the current spatial position and about the current network slice association of each of the plurality of user equipments (110, 110') associated with the respective network slice (130, 130') to a network entity (150), wherein the information about the current spatial position and about the current network slice association of each of the plurality of user equipments (110, 110') comprises an identifier, in particular an International Mobile Subscriber Identity, IMSI, for each of the plurality of user equipments (110, 110');
receiving (301), by the network entity (150), the information about the current spatial position and about the current network slice association of each of the plurality of user equipments (110, 110'); and
forwarding (303), by the network entity (150), on the basis of the information about the current spatial position and about the current network slice association of each of the plurality of user equipments (110, 110') an area-specific message to those network slices of the plurality of network slices (130, 130'), which are associated with at least one of the plurality of user equipments (110, 110') located in a defined spatial area (120a) of the mobile communication network (100) for distributing the area-specific message to the plurality of user equipments (110, 110') located in the defined spatial area (120a) of the mobile communication network (100).

12. A computer program product comprising program code for performing the method (300) of claim 11 when executed on a computer.

## Patentansprüche

1. Mobilkommunikationsnetzwerk (100), das eine Netzwerkentität (150) zum Liefern von bereichsspezifischen Nachrichten an mehrere Benutzereinrichtungen (110, 110') des Mobilkommunikationsnetzwerks (100) aufweist, wobei jede der mehreren Benutzereinrichtungen (110, 110') mit einer jeweiligen Netzwerkscheibe von mehreren Netzwerkscheiben (130, 130') des Mobilkommunikationsnetzwerks (100) verknüpft ist, wobei jede der mehreren Netzwerkscheiben (130, 130') konfiguriert ist, Informationen über die gegenwärtige räumliche Position und über die gegenwärtige Netzwerkscheibenverknüpfung von jeder der mehreren Benutzereinrichtungen (110, 110'), die mit der jeweiligen Netzwerkscheibe (130, 130') verknüpft sind, an die Netzwerkentität (150) bereitzustellen, wobei die Informationen über die gegenwärtige räumliche Position und über die gegenwärtige Netzwerkscheibenverknüpfung von jeder der mehreren Benutzereinrichtungen (110, 110') eine Kennung, insbesondere eine internationale Mobilteilnehmeridentität, IMSI, für jede der mehreren Benutzereinrichtungen (110, 110') aufweisen, und
wobei die Netzwerkentität (150) konfiguriert ist:
die Informationen über die gegenwärtige räumliche Position und über die gegenwärtige Netzwerkscheibenverknüpfung von jeder der mehreren Benutzereinrichtungen (110, 110') zu empfangen; und
auf der Grundlage der Informationen über die gegenwärtige räumliche Position und über die gegenwärtige Netzwerkscheibenverknüpfung von jeder der mehreren Benutzereinrichtungen (110, 110') eine bereichsspezifische Nachricht an jene Netzwerkscheiben der mehreren Netzwerkscheiben (130, 130'), die mit mindestens einer der mehreren Benutzereinrichtungen (110, 110') verknüpft sind, die sich in einem definierten räumlichen Bereich (120a) des Mobilkommunikationsnetzwerks (100) befinden, zum Verteilen der bereichsspezifischen Nachricht an die mehreren Benutzereinrichtungen (110, 110') weiterzuleiten, die sich in dem definierten räumlichen Bereich (120a) des Mobilkommunikationsnetzwerks (100) befinden.

2. Mobilkommunikationsnetzwerk (100) nach Anspruch 1, wobei die Netzwerkentität (150) aufweist:
eine Kommunikationsschnittstelle (153), die konfiguriert ist, Informationen über die gegenwärtige räumliche Position und über die gegenwärtige Netzwerkscheibenverknüpfung von jeder der mehreren Benutzereinrichtungen (110, 110') zu empfangen; und
eine Verarbeitungseinheit (151), die konfiguriert ist, auf der Grundlage der Informationen über die gegenwärtige räumliche Position und über die gegenwärtige Netzwerkscheibenverknüpfung von jeder der mehreren Benutzereinrichtungen (110, 110') die bereichsspezifische Nachricht an jene Netzwerkscheiben der mehreren Netzwerkscheiben (130, 130'), die mit mindestens einer der mehreren Benutzereinrichtungen (110, 110') verknüpft sind, die sich in dem definierten räumlichen Bereich (120a) des Mobilkommunikationsnetzwerks (100) befinden, zum Verteilen der bereichsspezifischen Nachricht an die mehreren Benutzereinrichtungen (110, 110') weiterzuleiten, die sich in dem definierten räumlichen Bereich (120a) des Mobilkommunikationsnetzwerks (100) befinden.

3. Mobilkommunikationsnetzwerk (100) nach Anspruch 2, wobei die Netzwerkentität (150) ferner einen Speicher (155) aufweist, der konfiguriert ist, die Informationen über die gegenwärtige räumliche Position und über die gegenwärtige Netzwerkscheibenverknüpfung von jeder der mehreren Benutzereinrichtungen (110, 110') zu speichern.

4. Mobilkommunikationsnetzwerk (100) nach einem der vorhergehenden Ansprüche, wobei die Informationen über die gegenwärtige räumliche Position und über die gegenwärtige Netzwerkscheibenverknüpfung von jeder der mehreren Benutzereinrichtungen (110, 110') räumliche Koordinaten der gegenwärtigen räumlichen Position von jeder der mehreren Benutzereinrichtungen (110, 110') aufweisen.

5. Mobilkommunikationsnetzwerk (100) nach einem der Ansprüche 1 bis 3, wobei die Informationen über die gegenwärtige räumliche Position und über die gegenwärtige Netzwerkscheibenverknüpfung von jeder der mehreren Benutzereinrichtungen (110, 110') für jede der mehreren Benutzereinrichtungen (110, 110') Informationen darüber aufweisen, ob sich die gegenwärtige räumliche Position von jeder der mehreren Benutzereinrichtungen (110, 110') innerhalb des definierten räumlichen Bereichs (120a) befindet.

6. Mobilkommunikationsnetzwerk (100) nach einem der vorhergehenden Ansprüche, wobei die Informationen über die gegenwärtige räumliche Position und über die gegenwärtige Netzwerkscheibenverknüpfung von jeder der mehreren Benutzereinrichtungen (110, 110') eine Netzwerkscheibenkennung der jeweiligen Netzwerkscheibe (130, 130') aufweisen, mit der jede der mehreren Benutzereinrichtungen (110, 110') verknüpft ist.

7. Mobilkommunikationsnetzwerk (100) nach Anspruch 1, wobei die Netzwerkentität (150) als eine oder mehrere virtuelle Netzwerkfunktionen oder als eine oder mehrere Netzwerkscheiben des Mobilkommunikationsnetzwerks (100) ausgeführt ist.

8. Mobilkommunikationsnetzwerk (100) nach Anspruch 1 oder 7, wobei jede der einen oder der mehreren Netzwerkscheiben (130, 130') konfiguriert ist, die bereichsspezifische Nachricht an die mehreren Benutzereinrichtungen (110, 110') zu verteilen, die sich in dem definierten räumlichen Bereich (120a) des Mobilkommunikationsnetzwerks (100) befinden.

9. Mobilkommunikationsnetzwerk (100) nach Anspruch 8, wobei das Mobilkommunikationsnetzwerk (100) ein Mobilkommunikationsnetzwerk (100) gemäß dem 5G-Standard oder einem darauf beruhenden Standard ist und wobei eine oder mehrere der mehreren Netzwerkscheiben (130, 130') eine Zugriffs- und Mobilitätsfunktion, AMF, aufweisen, die konfiguriert ist, die bereichsspezifische Nachricht an die mehreren Benutzereinrichtungen (110, 110') zu verteilen, die sich in dem definierten räumlichen Bereich (120a) des Mobilkommunikationsnetzwerks (100) befinden und mit der jeweiligen Netzwerkscheibe (130, 130') verknüpft sind.

10. Mobilkommunikationsnetzwerk (100) nach einem der Ansprüche 1 oder 7 bis 9, wobei das Mobilkommunikationsnetzwerk (100) mehrere Basisstationen (120) aufweist und wobei der definierte räumliche Bereich (120a) den Abdeckungsbereich von einer oder mehreren der mehreren Basisstationen (120) des Mobilkommunikationsnetzwerks (100) aufweist.

11. Verfahren (300) zum Liefern von bereichsspezifischen Nachrichten an mehrere Benutzereinrichtungen (110, 110') eines Mobilkommunikationsnetzwerks (100), wobei jede der mehreren Benutzereinrichtungen (110, 110') mit einer jeweiligen Netzwerkscheibe von mehreren Netzwerkscheiben (130, 130') des Mobilkommunikationsnetzwerks (100) verknüpft ist, wobei das Verfahren (300) aufweist:
Bereitstellen durch jede der mehreren Netzwerkscheiben (130, 130') von Informationen über die gegenwärtige räumliche Position und über die gegenwärtige Netzwerkscheibenverknüpfung von jeder der mehreren Benutzereinrichtungen (110, 110'), die mit der jeweiligen Netzwerkscheibe (130, 130') verknüpft sind, an eine Netzwerkentität (150), wobei die Informationen über die gegenwärtige räumliche Position und über die gegenwärtige Netzwerkscheibenverknüpfung von jeder der mehreren Benutzereinrichtungen (110, 110') eine Kennung, insbesondere eine internationale Mobilteilnehmeridentität, IMSI, für jede der mehreren Benutzereinrichtungen (110, 110') aufweisen;
Empfangen (301) durch die Netzwerkentität (150) der Informationen über die gegenwärtige räumliche Position und über die gegenwärtige Netzwerkscheibenverknüpfung von jeder der mehreren Benutzereinrichtungen (110, 110'); und
Weiterleiten (303) durch die Netzwerkentität (150) auf der Grundlage der Informationen über die gegenwärtige räumliche Position und über die gegenwärtige Netzwerkscheibenverknüpfung von jeder der mehreren Benutzereinrichtungen (110, 110') einer bereichsspezifischen Nachricht an jene Netzwerkscheiben der mehreren Netzwerkscheiben (130, 130'), die mit mindestens einer der mehreren Benutzereinrichtungen (110, 110') verknüpft sind, die sich in einem definierten räumlichen Bereich (120a) des Mobilkommunikationsnetzwerks (100) befinden, zum Verteilen der bereichsspezifischen Nachricht an die mehreren Benutzereinrichtungen (110, 110'), die sich in dem definierten räumlichen Bereich (120a) des Mobilkommunikationsnetzwerks (100) befinden.

12. Computerprogrammprodukt, das einen Programmcode zum Ausführen des Verfahrens (300) nach Anspruch 11 aufweist, wenn es auf einem Computer ausgeführt wird.

## Revendications

1. Réseau de communication mobile (100) comprenant une entité de réseau (150) pour la fourniture de messages spécifiques à une zone à une pluralité d'équipements d'utilisateur (110, 110') du réseau de communication mobile (100), chaque équipement de la pluralité d'équipements d'utilisateur (110, 110') étant associé à une tranche respective parmi une pluralité de tranches de réseau (130, 130') du réseau de communication mobile (100),
où chaque tranche de la pluralité de tranches de réseau (130, 130') est prévue pour fournir à l'entité de réseau (150) des informations relatives à la position spatiale actuelle et à l'association de tranche de réseau actuelle de chaque équipement de la pluralité d'équipements d'utilisateur (110, 110') associé à la tranche de réseau respective (130, 130'), les informations relatives à la position spatiale actuelle et à l'association de tranche de réseau actuelle de chaque équipement de la pluralité d'équipements d'utilisateur (110, 110') comprenant un identifiant, en particulier une identité internationale d'abonné mobile IMSI pour chaque équipement de la pluralité d'équipements d'utilisateur (110, 110'), et
où l'entité de réseau (150) est prévue pour :
recevoir les informations relatives à la position spatiale actuelle et à l'association de tranche de réseau actuelle de chaque équipement de la pluralité d'équipements d'utilisateur (110, 110') ; et,
sur la base des informations relatives à la position spatiale actuelle et à l'association de tranche de réseau actuelle de chaque équipement de la pluralité d'équipements d'utilisateur (110, 110'), adresser un message spécifique à une zone aux tranches de réseau de la pluralité de tranches de réseau (130, 130') qui sont associées à au moins un équipement de la pluralité d'équipements d'utilisateur (110, 110') situé dans une zone spatiale définie (120a) du réseau de communication mobile (100) pour fournir le message spécifique à une zone à la pluralité d'équipements d'utilisateur (110, 110') situés dans la zone spatiale définie (120a) du réseau de communication mobile (100).

2. Réseau de communication mobile (100) selon la revendication 1, où l'entité de réseau (150) comprend :
une interface de communication (153) prévue pour recevoir des informations relatives à la position spatiale actuelle et à l'association de tranche de réseau actuelle de chaque équipement de la pluralité d'équipements d'utilisateur (110, 110') ; et
une unité de traitement (151) prévue pour, sur la base des informations relatives à la position spatiale actuelle et à l'association de tranche de réseau actuelle de chaque équipement de la pluralité d'équipements d'utilisateur (110, 110'), adresser le message spécifique à une zone aux tranches de réseau de la pluralité de tranches de réseau (130, 130') qui sont associées à au moins un équipement de la pluralité d'équipements d'utilisateur (110, 110') situé dans une zone spatiale définie (120a) du réseau de communication mobile (100) pour fournir le message spécifique à une zone à la pluralité d'équipements d'utilisateur (110, 110') situés dans la zone spatiale définie (120a) du réseau de communication mobile (100).

3. Réseau de communication mobile (100) selon la revendication 2, où l'entité de réseau (150) comprend en outre une mémoire (155) prévue pour stocker les informations relatives à la position spatiale actuelle et à l'association de tranche de réseau actuelle de chaque équipement de la pluralité d'équipements d'utilisateur (110, 110').

4. Réseau de communication mobile (100) selon l'une des revendications précédentes, où les informations relatives à la position spatiale actuelle et à l'association de tranche de réseau actuelle de chaque équipement de la pluralité d'équipements d'utilisateur (110, 110') comprennent les coordonnées spatiales de la position spatiale actuelle de chaque équipement de la pluralité d'équipements d'utilisateur (110, 110').

5. Réseau de communication mobile (100) selon l'une des revendications 1 à 3, où les informations relatives à la position spatiale actuelle et à l'association de tranche de réseau actuelle de chaque équipement de la pluralité d'équipements d'utilisateur (110, 110') comprennent pour chaque équipement de la pluralité d'équipements d'utilisateur (110, 110') une information si la position spatiale actuelle de chaque équipement de la pluralité d'équipements d'utilisateur (110, 110') est située à l'intérieur de la zone spatiale définie (120a) ou non.

6. Réseau de communication mobile (100) selon l'une des revendications précédentes, où les informations relatives à la position spatiale actuelle et à l'association de tranche de réseau actuelle de chaque équipement de la pluralité d'équipements d'utilisateur (110, 110') comprennent un identifiant de la tranche de réseau respective (130, 130') à laquelle est associé chaque équipement de la pluralité d'équipements d'utilisateur (110, 110').

7. Réseau de communication mobile (100) selon la revendication 1, où l'entité de réseau (150) est implémentée en tant qu'une ou plusieurs fonctions de réseau virtuelles ou en tant qu'une ou plusieurs tranches de réseau du réseau de communication mobile (100).

8. Réseau de communication mobile (100) selon la revendication 1 ou la revendication 7, où chaque tranche de ladite une ou plusieurs tranches de réseau (130, 130') est prévue pour fournir le message spécifique à une zone à la pluralité d'équipements d'utilisateur (110, 110') situés dans la zone spatiale définie (120a) du réseau de communication mobile (100).

9. Réseau de communication mobile (100) selon la revendication 8, où ledit réseau de communication mobile (100) est un réseau de communication mobile (100) conforme à la norme 5G ou à une norme basée sur celle-ci, et où une ou plusieurs tranches de la pluralité de tranches de réseau (130, 130') comprend une fonction d'accès et de mobilité AMF prévue pour fournir le message spécifique à une zone à la pluralité d'équipements d'utilisateur (110, 110') situés dans la zone spatiale définie (120a) du réseau de communication mobile (100) et associés à la tranche de réseau respective (130, 130').

10. Réseau de communication mobile (100) selon l'une des revendications 1 ou 7 à 9, où ledit réseau de communication mobile (100) comprend une pluralité de stations de base (120) et où la zone spatiale définie (120a) comprend la zone de couverture d'une ou de plusieurs stations de la pluralité de stations de base (120) du réseau de communication mobile (100).

11. Procédé (300) de fourniture de messages spécifiques à une zone à une pluralité d'équipements d'utilisateur (110, 110') d'un réseau de communication mobile (100), chaque équipement de la pluralité d'équipements d'utilisateur (110, 110') étant associé à une tranche respective parmi une pluralité de tranches de réseau (130, 130') du réseau de communication mobile (100), ledit procédé (300) comprenant :
la fourniture à une entité de réseau (150), par chaque tranche de la pluralité de tranches de réseau (130, 130'), d'informations relatives à la position spatiale actuelle et à l'association de tranche de réseau actuelle de chaque équipement de la pluralité d'équipements d'utilisateur (110, 110') associé à la tranche de réseau respective (130, 130'), les informations relatives à la position spatiale actuelle et à l'association de tranche de réseau actuelle de chaque équipement de la pluralité d'équipements d'utilisateur (110, 110') comprenant un identifiant, en particulier une identité internationale d'abonné mobile IMSI pour chaque équipement de la pluralité d'équipements d'utilisateur (110, 110') ;
la réception (301) par l'entité de réseau (150) des informations relatives à la position spatiale actuelle et à l'association de tranche de réseau actuelle de chaque équipement de la pluralité d'équipements d'utilisateur (110, 110') ; et
la transmission (303) par l'entité de réseau (150), sur la base des informations relatives à la position spatiale actuelle et à l'association de tranche de réseau actuelle de chaque équipement de la pluralité d'équipements d'utilisateur (110, 110'), d'un message spécifique à une zone aux tranches de réseau de la pluralité de tranches de réseau (130, 130') qui sont associées à au moins un équipement de la pluralité d'équipements d'utilisateur (110, 110') situé dans une zone spatiale définie (120a) du réseau de communication mobile (100) pour fournir le message spécifique à une zone à la pluralité d'équipements d'utilisateur (110, 110') situés dans la zone spatiale définie (120a) du réseau de communication mobile (100).

12. Produit de programme informatique comprenant un code programme pour l'exécution du procédé (300) selon la revendication 11 lorsqu'il est lancé sur un ordinateur.
